(19) Europäisches Patentamt
European Patent Office
Office européen des brevets

(11) EP 4 036 937 B1

(12) **EUROPEAN PATENT SPECIFICATION**

(45) Date of publication and mention of the grant of the patent:
**12.07.2023 Bulletin 2023/28**

(21) Application number: **22153173.4**

(22) Date of filing: **25.01.2022**

(51) International Patent Classification (IPC):
***H01B 3/44** (2006.01)* ***C08L 27/06** (2006.01)*
*C08K 5/00 (2006.01)*

(52) Cooperative Patent Classification (CPC):
(C-Sets available)
**H01B 3/443; C08L 27/06;** C08K 5/0016 (Cont.)

(54) **CABLE AND WIRE HARNESS**

KABEL UND KABELBAUM

CÂBLE ET FAISCEAU DE CÂBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2021 JP 2021010942**

(43) Date of publication of application:
**03.08.2022 Bulletin 2022/31**

(73) Proprietor: **Yazaki Corporation**
**Tokyo (JP)**

(72) Inventor: **Horiuchi, Yuki**
**Susono-shi, Shizuoka (JP)**

(74) Representative: **Grünecker Patent- und Rechtsanwälte**
**PartG mbB**
**Leopoldstraße 4**
**80802 München (DE)**

(56) References cited:
**US-A1- 2014 060 925** **US-A1- 2014 079 951**
**US-B2- 10 600 531**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 27/06, C08K 5/12, C08L 23/286;**
**C08L 27/06, C08K 5/12, C08L 55/02**

## Description

TECHNICAL FIELD

The present invention relates to a cable and a wire harness.

BACKGROUND

A cable covered with a vinyl chloride resin composition has satisfactory flexibility and flame retardancy, and hence is used as a cable dedicated to an automobile in many cases.

JP 2000-260228 A discloses a sheathed cable characterized in that a calcium carbonate, a plasticizing agent, and a methyl methacrylate-butadiene-styrene copolymer (MBS) are blended to a base polymer composed of a vinyl chloride resin and a methyl methacrylate resin. In JP 2000-260228 A, an example in which diundecyl phthalate (DUP) is used as a plasticizing agent is given.

US2014/079951A1, US2014/060925A1 and US10600531B2 also disclose cables.

SUMMARY

Diundecyl phthalate is produced from alcohol having a large number of carbon atoms, and has low volatility. Thus, diundecyl phthalate has a potential for satisfying heat resistance required for a cable dedicated to an automobile. However, JP 2000-260228 A has an object to achieve a sheathed cable with a low halogen content amount by controlling a particle size and a content amount of a calcium carbonate. Thus, there is a difficulty in achieving heat resistance, low-temperature resistance, and abrasion resistance of a cable in a balanced manner.

The present invention has been achieved in view of the above-mentioned problem in such a related-art. Further, the present invention has an object to provide a cable and a wire harness that are excellent in heat resistance, low-temperature resistance, and abrasion resistance.

A cable according to the present invention as defined in claim 1 includes a conductor and a sheathing layer that covers an outer circumference of the conductor and is formed of a resin composition containing a vinyl chloride resin, diundecyl phthalate, and an impact modifier. The conductor is a round-compressed stranded wire conductor including a plurality of wires. Diundecyl phthalate is contained by 28 to 32 mass parts with respect to 100 mass parts of the vinyl chloride resin. The impact modifier is contained by 1 to 8 mass parts with respect to 100 mass parts of the vinyl chloride resin. The resin composition has a brittleness temperature of -25 °C or lower. When the resin composition is heated at 120 °C for 120 hours, a rate of a reduced mass after heating with respect to a mass before heating is 1.5% or less. A rate of a total sum of a peak area derived from diundecyl phthalate having two n-undecyl groups with respect to a total sum of a peak area derived from diundecyl phthalate is from 40% to 100%, based on a chromatogram obtained by analyzing all kinds of diundecyl phthalate contained in the resin composition with the gas chromatography-flame ionization detection method. A preferred embodiment of the cable is defined in claim 2. According to another aspect, the present invention provides a wire harness according to claim 3.

Further, according to the present invention, there can be provided the cable and the wire harness that are excellent in heat resistance, low-temperature resistance, and abrasion resistance.

BRIEF DESCRIPTION OF THE DRAWINGS

FIG. 1 is a cross-sectional view illustrating one example of a cable according to the present embodiment.

DETAILED DESCRIPTION

Now, with reference to the drawings, a cable and a wire harness according to the present embodiment are described. Note that dimensional ratios in the drawings are overdrawn for convenience of description, and may be different from actual dimensional ratios in some cases.

As illustrated in Fig. 1, a cable 10 according to the present embodiment includes a conductor 1 and a sheathing layer 2 that covers an outer circumference of the conductor 1.

The conductor 1 is a round-compressed stranded wire conductor obtained by concentrically stranding a plurality of wires and subjecting the resultant to round-compression.

The sheathing layer 2 is formed of a resin composition. The resin composition contains a vinyl chloride resin, diundecyl phthalate, and an impact modifier.

The vinyl chloride resin may be a homopolymer obtained by homopolymerizing a vinyl chloride monomer, or may be a copolymer obtained by polymerizing monomers other than a vinyl chloride monomer and a vinyl chloride

monomer. Examples of the copolymer obtained by polymerizing monomers other than a vinyl chloride monomer and a vinyl chloride monomer include a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride copolymer, a vinyl chloride-styrene-acrylic nitrile copolymer, a vinyl chloride-butadiene copolymer, a vinyl chloride-isoprene copolymer, a vinyl chloride-chlorinated propylene copolymer, a vinyl chloride-vinylidene chloride-vinyl acetate copolymer, a vinyl chloride-maleate copolymer, a vinyl chloride-methacrylic ester copolymer, a vinyl chloride-acrylic nitrile copolymer, a vinyl chloride-various vinyl ether copolymer. One of those vinyl chloride resins may be used solely. Alternatively, two or more kinds selected from those vinyl chloride resins may be used in combination. Further, those vinyl chloride resins may be modified when used. Examples of the modified vinyl chloride resin include chlorinated polyvinyl chloride. Note that a method of polymerizing a vinyl chloride resin may be bulk polymerization, solution polymerization, suspension polymerization, emulsion polymerization, and the like, but not particularly limited thereto.

An average polymerization degree (weight-average polymerization degree) of the vinyl chloride resin is not particularly limited, and is preferably from 500 to 5,000, more preferably, from 1,000 to 3,000. When the average polymerization degree is 500 or greater, degradation of abrasion resistance of the obtained resin composition can be suppressed. Further, in a case where the resin composition is subjected to extrusion molding, when the average polymerization degree is 5,000 or less, increase of melt viscosity at the time of extrusion molding can be suppressed. Moreover, degradation of kneading and moldability can be suppressed. Note that, in the resin composition in the present embodiment, one or more kinds of vinyl chloride resins falling within the polymerization degree range described above may be used in combination. Note that the average polymerization degree can be obtained according to Japanese Industrial Standards JIS K 6720-2:1999 (Plastics -- Homopolymer and copolymer resins of vinyl chloride -- Part 2: Preparation of test samples and determination of properties).

As a plasticizing agent, diundecyl phthalate may be added to the resin composition. Diundecyl phthalate permeates through molecules of the vinyl chloride resin and weakens an intermolecular force of the resin, thereby providing the vinyl chloride resin with flexibility. In general, phthalic ester other than diundecyl phthalate can be used as a plasticizing agent. However, when diundecyl phthalate is used, heat resistance can be improved.

Diundecyl phthalate has a functional group at an ortho-position of a benzene ring, and the functional group has a 11-C alkyl group. Diundecyl phthalate is represented by a general formula such as Chemical Formula 1.

[Chem. 1]

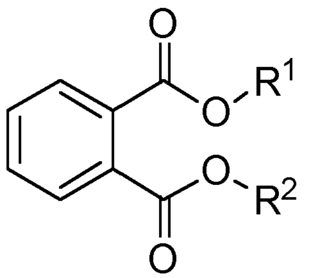

In the general formula such as Chemical Formula 1, $R^1$ and $R^2$ are expressed by $C_{11}H_{23}$, and include a n-undecyl group being a straight-chain undecyl group, or a 1-methyl decyl group, a 2-methyl decyl group, a 9-methyl decyl group, or the like being a branched undecyl group. A straight chain rate of diundecyl phthalate is from 40% to 100%, preferably, from 70% to 100%. When a straight chain rate of diundecyl phthalate is 40% or greater, heat resistance and low-temperature resistance can be improved.

A straight chain rate of diundecyl phthalate can be calculated according to Calculation Formula (1) given below, based on a chromatogram obtained by analyzing all kinds of diundecyl phthalate contained in the resin composition with the gas chromatography-flame ionization detection method.

Straight chain rate of diundecyl phthalate (%) = (total sum of peak area derived from diundecyl phthalate having two n-undecyl groups) / (total sum of peak area derived from diundecyl phthalate) × 100 ··· (1)

Specifically, a chromatogram is obtained by analyzing all kinds of diundecyl phthalate contained in the resin

composition with the gas chromatography-flame ionization detection method. Based on the chromatogram, a rate of the total sum of a peak area derived from diundecyl phthalate having two n-undecyl groups with respect to the total sum of a peak area derived from diundecyl phthalate is from 40% to 100%. Note that the above-mentioned peak area indicates an area defined by a peak and a straight line connecting both the bottoms of the peak to each other, according to JIS K 0114:2012 (General rules for gas chromatography).

Measurement with the gas chromatography-flame ionization detection method (GC-FID method) can be performed under conditions given below.

<Gas Chromatograph (GC) Conditions>

Column: UA-5 (length of 30 m, inner diameter of 0.25 mm, film thickness of 0.25 μm) available from Frontier Laboratories Ltd.
Split ratio: 50:1
Temperature-rising conditions (initial temperature of 40 °C [maintained for 2 minutes], terminal temperature of 320 °C [maintained for 13 minutes], temperature-rising rate of 20 °C per minute)
Inlet temperature: 320 °C
Carrier gas flow rate: helium 1.0 mL per minute

<Flame Ionization Detector (FID) Conditions>

Detector temperature: 340 °C
Hydrogen flow rate: 35 mL per minute
Air flow rate: 400 mL per minute
Make-up gas flow rate: 30 mL per minute

A content amount of diundecyl phthalate is 28 to 32 mass parts with respect to 100 mass parts of the vinyl chloride resin. When the content amount of diundecyl phthalate described above is 28 mass parts or greater, heat resistance can be improved. Further, when the content amount of diundecyl phthalate described above is 32 mass parts or less, heat resistance and abrasion resistance can be improved.

Note that, as the plasticizing agent, phthalic ester other than diundecyl phthalate may be used in combination. Examples of phthalic ester other than diundecyl phthalate include di-2-ethylhexyl phthalate (DOP), di-n-octyl phthalate (DNOP), diisononyl phthalate (DINP), dinonyl phthalate (DNP), diisodecyl phthalate (DIDP), di-tridecyl phthalate (DTDP), di-n-hexyl phthalate (DHP), di-isobutyl phthalate (DIBP), and dibutyl phthalate (DBP). Further, in place of phthalic ester, a trimellitic plasticizing agent, a pyromellitic plasticizing agent, an aliphatic plasticizing agent, and the like may be used in combination.

An impact modifier may be added to the resin composition. The impact modifier, which is appropriately selected from those generally used for improving shock resistance of the vinyl chloride resin, may be used. For example, the impact modifier contains an organic material. Examples of the organic material include methyl methacrylate (MMA), a methyl methacrylate-butadiene-styrene copolymer (MBS), an acrylic nitrile-butadiene-styrene copolymer (ABS), chlorinated polyethylene, and an ethylene-vinyl acetate copolymer (EVA). From a viewpoint of compatibility with the polyvinyl chloride resin, cold resistance, and an enhanced shock absorbing effect, the impact modifier is preferably at least one of a methyl methacrylate-butadiene-styrene copolymer or chlorinated polyethylene.

A content amount of the impact modifier in the resin composition is 1 to 8 mass parts with respect to 100 mass parts of the vinyl chloride resin. When the content amount of the impact modifier is 1 mass part or greater, low-temperature resistance can be improved. Further, when the content amount of the impact modifier is 8 mass parts or less, abrasion resistance can be improved.

A stabilizer may be added to the resin composition in order to suppress a dehydrochlorination reaction, which is one of the deterioration mechanisms unique to the vinyl chloride resin. Examples of the stabilizer include a metal soap stabilizer. Specifically, at least one kind selected from a group consisting of a Sn-based stabilizer, a Ba-based stabilizer, a Zn-based stabilizer, a Ca-based stabilizer, a Pb-based stabilizer, a Ca-Zn-based stabilizer, and a Ba-Zn-based stabilizer may be used as the stabilizer. Note that the Ca-Zn-based stabilizer is preferably used as the stabilizer. A composite metal soap-based stabilizer as described above is excellent in heat resistance. Thus, heat resistance of the sheathing layer 2, which is required for a high-temperature area of an automobile, can be secured for a long time period.

From a viewpoint of formability, a content amount of the stabilizer in the resin composition is preferably 1 to 20

mass parts, more preferably, 5 to 15 mass parts with respect to 100 mass parts of the vinyl chloride resin.

Other additives may be added to the resin composition as required, by such an amount that does not degrade effects of the present embodiment. Examples of the additives include a flame-retardant auxiliary, an antioxidant, a metal deactivator, an aging inhibitor, a lubricant, a filler, an ultraviolet absorber, pigment, dye, a coloring agent, an antistatic agent, and a foaming agent.

Low-temperature resistance of the resin composition can be evaluated by measuring a brittleness temperature. From a viewpoint of low-temperature resistance, the resin composition has a brittleness temperature of preferably -25 °C or lower, more preferably, -26 °C or lower. Note that a brittleness temperature indicates a temperature at which a plastic material easily breaks because plasticity and ductility are lost and strength against a mechanical shock is degraded at the time of cooling. A brittleness temperature also indicates a temperature at which 50% of a test piece breaks when a shock test is conducted. Further, a brittleness temperature can be obtained by following the calculation method 8.(1) according to JIS K7216:1980 (Testing method for brittleness temperature of plastics).

Heat resistance of the resin composition can be evaluated by measuring a mass reduction rate on heating. A mass reduction rate on heating indicates a rate of a reduced mass after heating with respect to a mass before heating. From a viewpoint of heat resistance, when the resin composition is heated at 120 °C for 120 hours, a rate of a reduced mass after heating with respect to a mass before heating is preferably 1.5% or less, more preferably, 1.3% or less. Note that a mass reduction rate on heating can be obtained by Calculation Formula (2) given below.

$$\text{Mass reduction rate on heating (\%)} = (\text{mass of test piece before heating} - \text{mass of test piece after heating}) / \text{mass of test piece before heating} \times 100 \cdots (2)$$

The thickness of the sheathing layer 2 is not particularly limited as long as electric insulation can be secured, and may be set to, for example, 0.16 mm to 0.25 mm.

The conductor 1 and the sheathing layer 2 are described above. The cable 10 according to the present embodiment can be prepared by covering the conductor 1 with the resin composition described above. A method of manufacturing the cable 10 according to the present embodiment is described below. The sheathing layer 2 of the cable 10 can be prepared by kneading the materials described above, and a publicly known method may be used as the method therefor. For example, the materials are preblended in advance through use of a high-speed mixing device such as a Henschel mixer, and then the resultant is subjected to kneading through use of a publicly known kneading device such as a Banbury mixer, a kneader, and open rolls. With this, the resin composition forming the sheathing layer 2 may be obtained.

Further, a publicly known method may be used as the method of covering the conductor 1 with the resin composition. For example, the sheathing layer 2 may be formed by a general extrusion molding method. Further, for example, a single screw extruder or a twin screw extruder may be used as an extruder used in the extrusion method. An extruder including a screw, a breaker plate, a cross head, a distributor, a nipple, and a die may be used.

When the resin composition forming the sheathing layer 2 is prepared, resin materials are fed into a single screw extruder. The single screw extruder is set to a temperature at which the resin materials are sufficiently melted. At this state, other components such as a lubricant, a flame-retardant auxiliary, and an antioxidant are also fed as required. Further, the resin materials are melted and subjected to kneading by a screw, and a constant amount thereof is supplied to a cross head via a breaker plate. The melted resin materials flow into a circumference of a nipple through a distributor, and are extruded from a die under a state in which the melted resin materials cover the outer circumference of the conductor 1. With this, the sheathing layer 2 covering the outer circumference of the conductor 1, that is, the cable 10 can be obtained.

As described above, the cable according to the present embodiment includes the conductor 1 and the sheathing layer 2 that covers the outer circumference of the conductor 1 and is formed of the resin composition containing the vinyl chloride resin, diundecyl phthalate, and the impact modifier. The conductor is a round-compressed stranded wire conductor including a plurality of wires. The content amount of diundecyl phthalate is 28 to 32 mass parts with respect to 100 mass parts of the vinyl chloride resin. The content amount of the impact modifier is 1 to 8 mass parts with respect to 100 mass parts of the vinyl chloride resin. The resin composition has a brittleness temperature of -25 °C or lower. When the resin composition is heated at 120 °C for 120 hours, a rate of a reduced mass after heating with respect to a mass before heating is 1.5% or less. Thus, the cable according to the present embodiment is excellent in heat resistance, low-temperature resistance, and abrasion resistance.

The wire harness according to the present embodiment includes the cable 10 described above, and hence can be suitably used as a wire harness that is excellent in heat resistance, low-temperature resistance, and abrasion resistance.

[Examples]

The present embodiment is further described below in detail with Examples and Comparative Examples.

[Preparation of Samples]

Raw materials for preparing the resin composition and a conductor for a cable listed below were prepared.
Vinyl chloride resin (average polymerization degree of 1,300): TK-1300 (product name) available from Shin-Etsu Chemical Co., Ltd.
Diundecyl phthalate A (straight chain rate of 71%)
Diundecyl phthalate B (straight chain rate of 23%)
Impact modifier (MBS): Metablen (registered trade mark) C-223A (product name) available from Mitsubishi Chemical Corporation
Impact modifier (chlorinated polyethylene): ELASLEN (registered trade mark) 401A (product name) available from Showa Denko K.K.
Stabilizer (Ca-Zn-based stabilizer): Adekastab (registered trade mark) RUP-110 (product name) available from ADEKA CORPORATION
Conductor: a round-compressed stranded copper wire conductor (cross-sectional area of 0.3 5 $mm^2$)
As a result of calculation with Calculation Formula (1) given above, a straight chain rate of diundecyl phthalate A was 71%, and a straight chain rate of diundecyl phthalate B was 23%.
The preparation raw materials described above were blended according to blending ratios (mass parts) of resin compositions shown in Table 1 and Table 2, and were melted and kneaded evenly at a temperature of 180 °C through use of open rolls. In this manner, a resin composition in each of Examples and Comparative Examples was prepared.
Each of the resin compositions in Examples and Comparative Examples was fed into a single screw extruder in which the copper wire described above was set, and was subjected to extrusion molding at a temperature of 185 °C. Then, the resin composition formed a sheathing layer that covers an outer circumference of the copper wire. In this manner, a cable in each of Examples and Comparative Examples was obtained. Note that the thickness of the sheathing layer was adjusted to 0.2 mm at the time of extrusion molding.

[Evaluation]

Material properties of the resin composition were evaluated based on a brittleness temperature and a mass reduction rate on heating.

(Brittleness Temperature)

According to JIS K7216:1980, a test piece (length of 38.0 mm, width of 6.0 mm, thickness of 2.0 mm) was prepared from the resin composition in each Examples and Comparative Examples, and a brittleness temperature was measured. When a brittleness temperature was -25 °C or lower, an evaluation result of "satisfactory" was given. When a brittleness temperature was higher than -25 °C, an evaluation result of "poor" was given.

(Mass Reduction Rate on Heating)

A JIS No. 3 dumbbell sheet (thickness of 1.0 mm) was prepared from the resin composition in each Examples and Comparative Examples, and a test piece mass before heating was measured. Then, the test piece was heated at 120 °C for 120 hours, and a test piece mass after heating was measured. A mass reduction rate on heating was calculated based on the calculation formula given above. When a mass reduction rate on heating was 1.5% or less, an evaluation result of "satisfactory" was given. When a mass reduction rate on heating was greater than 1.5%, an evaluation result of "poor" was given.
Properties of the cable were evaluated by conducting a short-term heating test and a abrasion resistance test.

(Short-term Heating Test)

According to the international standard ISO 19642 5.4.3, the short-term heating test was conducted for the cable in each Examples and Comparative Examples. Specifically, the cable was heated at 130 °C for 240 hours, and then was cooled at -25 °C for 4 hours. After that, the cable was wound about a mandrel having the same outer diameter as the cable outer diameter, and whether a conductor part of the wound cable was exposed was confirmed. At this state, when exposure of the conductor part was not confirmed, a voltage of 1,000 V was applied between the conductor and

the outer circumferential surface of the sheathing layer of the cable for one minute. In this manner, presence or absence of insulation breakdown in the sheathing layer was checked. When insulation breakdown was not caused, an evaluation result of "satisfactory" was given. When insulation breakdown was caused, an evaluation result of "poor" was given.

(Abrasion Resistance Test)

According to the international standard ISO 19642 5.3.2.5, the abrasion resistance test (scraping test) was conducted for the cable in each Examples and Comparative Examples. Specifically, at a temperature of 23 °C, a load applied to a blade was set to 7N. The blade was caused to reciprocate along the cable. The number of reciprocations was measured when the copper wire present inside appeared. Similar measurement was repeated while one cable was rotated about the center axis by 90 degrees, and thus four measurements in total were performed for the same cable. When the minimum value in the four measurements was 250 or greater, an evaluation result of "satisfactory" was given. When the minimum value in the four measurements was less than 250, an evaluation result of "poor" was given.

[Table 1]

| | | | Example 1 | Example 2 | Example 3 | Example 4 | Example 5 | Example 6 | Example 7 |
|---|---|---|---|---|---|---|---|---|---|
| Material composition | Vinyl chloride resin | | 100 | 100 | 100 | 100 | 100 | 100 | 100 |
| | Diundecyl phthalate | A | 28 | 30 | 32 | 30 | 30 | 30 | 10.5 |
| | | B | - | - | - | - | - | - | 19.5 |
| | Impact modifier | MBS | 5 | 5 | 5 | 1 | 8 | - | 5 |
| | | Chlorinated polyethylene | - | - | - | - | - | 5 | - |
| | Stabilizer | Ca-Zn-based stabilizer | 5 | 5 | 5 | 5 | 5 | 5 | 5 |
| Properties | Material properties | Brittleness temperature | Satisfactory | Satisfactory (-26.1 °C) | Satisfactory | Satisfactory | Satisfactory | Satisfactory | Satisfactory (-25.2 °C) |
| | | Mass reduction rate on heating | Satisfactory | Satisfactory (1.29 %) | Satisfactory | Satisfactory | Satisfactory | Satisfactory | Satisfactory (1.48 %) |
| | Wire properties | Short-term heating test | Satisfactory | Satisfactory | Satisfactory | Satisfactory | Satisfactory | Satisfactory | Satisfactory |
| | | Abrasion resistance test | Satisfactory | Satisfactory | Satisfactory | Satisfactory | Satisfactory | Satisfactory | Satisfactory |

[Table 2]

| | | | Comparative Example 1 | Comparative Example 2 | Comparative Example 3 | Comparative Example 4 | Comparative Example 5 |
|---|---|---|---|---|---|---|---|
| Material composition | Vinyl chloride resin | | 100 | 100 | 100 | 100 | 100 |
| | Diundecyl phthalate | A | 27 | 33 | – | 30 | 30 |
| | | B | – | – | 30 | – | – |
| | Impact modifier | MBS | 5 | 5 | 5 | 0 | 10 |
| | | Chlorinated polyethylene | – | – | – | – | – |
| | Stabilizer | Ca-Zn-based stabilizer | 5 | 5 | 5 | 5 | 5 |
| Properties | Material properties | Brittleness temperature | Poor | Satisfactory | Poor (-24.0 °C) | Poor | Satisfactory |
| | | Mass reduction rate on heating | Satisfactory | Poor | Poor (1.61 %) | Satisfactory | Satisfactory |
| | Wire properties | Short-term heating test | Poor | Satisfactory | Poor | Poor | Satisfactory |
| | | Abrasion resistance test | Satisfactory | Poor | Satisfactory | Satisfactory | Poor |

From Table 1, in Examples 1 to 7, with respect to 100 mass parts of the vinyl chloride resin, a content amount of diundecyl phthalate was 28 to 32 mass parts, and a content amount of the impact modifier was 1 to 8 mass parts. Note that a straight chain rate of diundecyl phthalate in Examples 1 to 6 was 71%, and a straight chain rate in Example 7 was 40%. Based on the results in each of Examples 1 to 7, low-temperature resistance was satisfactory because a brittleness temperature was -25 °C or lower, and heat resistance was satisfactory because a mass reduction rate on heating was 1.5% or less. Further, in each of Examples 1 to 7, the results of the short-term heating test and the abrasion resistance test were satisfactory.

In contrast, from Table 2, a content amount of diundecyl phthalate was excessively small in Comparative Example 1, and hence low-temperature resistance was degraded. A content amount of diundecyl phthalate was excessively large in Comparative Example 2, and hence heat resistance was degraded. Further, in Comparative Example 3, a straight chain rate of diundecyl phthalate was less than 40%, and hence low-temperature resistance and heat resistance

were degraded. Moreover, in Comparative Example 4, a content amount of diundecyl phthalate was 30 mass parts, and a straight chain rate was 71%, which were similar to those in Examples 2 and 4 to 6. However, the impact modifier was not used, and hence low-temperature resistance was degraded. With regard to abrasion resistance, Comparative Example 2 with an excessive content amount of diundecyl phthalate and Comparative Example 5 with an excessive amount of the impact modifier received negative influences.

## Claims

1. A cable (10), comprising:

   a conductor (1); and
   a sheathing layer (2) configured to cover an outer circumference of the conductor (1), the sheathing layer (2) being formed of a resin composition containing a vinyl chloride resin, diundecyl phthalate, and an impact modifier, wherein
   the conductor (1) comprises a round-compressed stranded wire conductor including a plurality of wires,
   diundecyl phthalate is contained by 28 to 32 mass parts with respect to 100 mass parts of the vinyl chloride resin,
   the impact modifier is contained by 1 to 8 mass parts with respect to 100 mass parts of the vinyl chloride resin,
   the resin composition has a brittleness temperature of -25 °C or lower, as obtained by following the calculation method 8.(1) according to JIS K7216:1980, and
   when the resin composition is heated at 120 °C for 120 hours, a rate of a reduced mass after heating with respect to a mass before heating is 1.5% or less;
   wherein a rate of a total sum of a peak area derived from diundecyl phthalate having two n-undecyl groups with respect to a total sum of a peak area derived from diundecyl phthalate is from 40% to 100%, based on a chromatogram obtained by analyzing all kinds of diundecyl phthalate contained in the resin composition with the gas chromatography-flame ionization detection method.

2. The cable (10) according to claim 1, wherein
   the impact modifier comprises at least one of a methyl methacrylate-butadiene-styrene copolymer or chlorinated polyethylene.

3. A wire harness, comprising:
   the cable (10) according to claim 1 or 2.

## Patentansprüche

1. Kabel (10), umfassend:

   einen Leiter (1); und
   eine Ummantelungsschicht (2), konfiguriert um einen äußeren Umfang des Leiters (1) zu bedecken, wobei die Ummantelungsschicht (2) aus einer Harzzusammensetzung gebildet ist, enthaltend ein Vinylchloridharz, Diundecylphthalat und einen Schlagzähigkeitsmodifikator, wobei
   der Leiter (1) einen rundkomprimierten Drahtleiter, beinhaltend eine Vielzahl von Drähten, umfasst,
   Diundecylphthalat in 28 bis 32 Massenteilen, bezogen auf 100 Massenteile des Vinylchloridharzes, enthalten ist,
   der Schlagzähigkeitsmodifikator in 1 bis 8 Massenteilen, bezogen auf 100 Massenteile des Vinylchloridharzes, enthalten ist,
   die Harzzusammensetzung eine Sprödigkeitstemperatur von -25 °C oder weniger, wie durch Befolgen der Berechnungsmethode 8.(1) gemäß JIS K7216:1980 erhalten, besitzt, und
   wenn die Harzzusammensetzung 120 Stunden lang bei 120 °C erhitzt wird, ein Anteil einer reduzierten Masse nach Erhitzen in Bezug auf eine Masse vor Erhitzen 1,5 % oder weniger ist;
   wobei ein Anteil einer Gesamtsumme einer Peakfläche, herrührend von Diundecylphthalat, besitzend zwei n-Undecylgruppen, in Bezug auf eine Gesamtsumme einer Peakfläche, herrührend von Diundecylphthalat, 40 % bis 100 % ist, basierend auf einem Chromatogramm, erhalten durch Analysieren aller Arten von Diundecylphthalat, enthaltend in der Harzzusammensetzung, mit dem Gaschromatographie-Flammenionisationsnachweisverfahren.

2. Das Kabel (10) nach Anspruch 1, wobei

der Schlagzähigkeitsmodifikator mindestens eines von Methylmethacrylat-Butadien-Styrol-Copolymer oder chloriertes Polyethylen umfasst.

**3.** Kabelbaum, umfassend:
das Kabel (10) nach Anspruch 1 oder 2.

**Revendications**

**1.** Câble (10), comprenant :

un conducteur (1) ; et
une couche de gainage (2) configurée pour couvrir une circonférence extérieure du conducteur (1), la couche de gainage (2) étant formée d'une composition de résine contenant une résine de chlorure de vinyle, du phtalate de diundécyle et un modificateur d'impact, dans lequel
le conducteur (1) comprend un conducteur à fils toronnés comprimés de façon circulaire comprenant une pluralité de fils,
le phtalate de diundécyle est contenu à raison de 28 à 32 parties en masse par rapport à 100 parties en masse de la résine de chlorure de vinyle,
le modificateur d'impact est contenu à raison de 1 à 8 parties en masse par rapport à 100 parties en masse de la résine de chlorure de vinyle,
la composition de résine a une température de fragilité inférieure ou égale à-25°C, telle qu'obtenue en suivant le procédé de calcul 8.(1) selon JIS K7216:1980, et
lorsque la composition de résine est chauffée à 120°C pendant 120 heures, un taux d'une masse réduite après chauffage par rapport à une masse avant chauffage est inférieur ou égal à 1,5% ;
dans lequel un taux d'une somme totale d'une surface de pic dérivée du phtalate de diundécyle ayant deux groupes n-undécyle par rapport à une somme totale d'une surface de pic dérivée du phtalate de diundécyle est de 40% à 100%, sur la base d'un chromatogramme obtenu en analysant tous les types de phtalate de diundécyle contenus dans la composition de résine avec le procédé de détection par ionisation de flamme par chromatographie en phase gazeuse.

**2.** Câble (10) selon la revendication 1, dans lequel
le modificateur d'impact comprend au moins l'un parmi un copolymère méthacrylate de méthyle-butadiène-styrène ou un polyéthylène chloré.

**3.** Faisceau électrique comprenant :
le câble (10) selon la revendication 1 ou 2.

FIG. 1

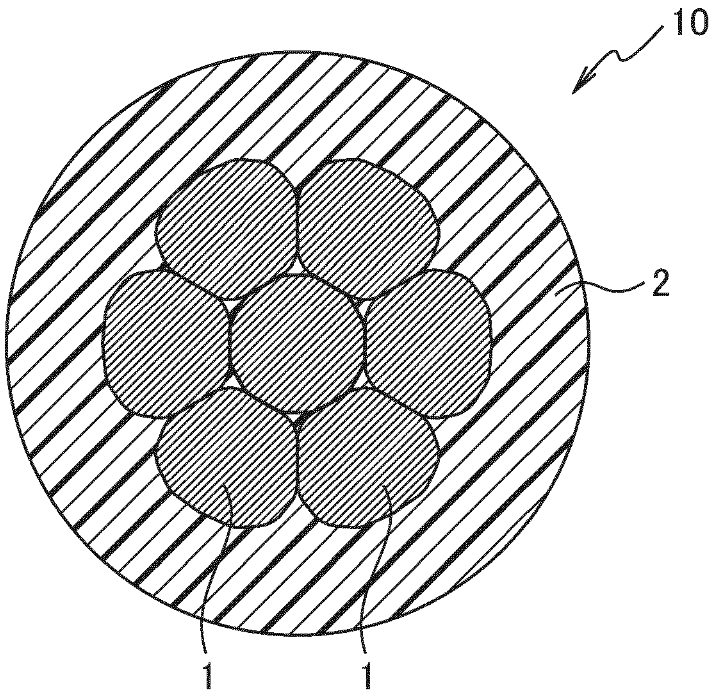

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000260228 A
- US 2014079951 A1
- US 2014060925 A1
- US 10600531 B2